# EUROPÄISCHE PATENTSCHRIFT

(11) **EP 2 289 624 B1**
(45) Veröffentlichungstag und Bekanntmachung des Hinweises auf die Patenterteilung: **12.11.2014**
(21) Anmeldenummer: 10011995.7
(22) Anmeldetag: 12.03.2003
(51) Int. Cl.: B01L 3/00, B29C 45/16

(54) **Mikrotiterplatte**
Microtiter plate
Plaque de microtitration

(30) Priorität: 22.03.2002 DE 10212761
(43) Veröffentlichungstag der Anmeldung: 02.03.2011
(62) Teilanmeldung aus: 03005574.3
(73) Patentinhaber: EPPENDORF AG, 22339 Hamburg (DE)
(72) Erfinder: Seippel, Martin, D-22949 Ammersbek (DE)
(74) Vertreter: Hauck Patent- und Rechtsanwälte

(56) Entgegenhaltungen:
- EP-A- 0 106 662
- EP-A- 0 844 025
- EP-A- 1 161 994
- US-A- 5 759 494
- US-B1- 6 232 114
- US-B1- 6 340 589

## Beschreibung

Die Erfindung bezieht sich auf eine Mikrotiterplatte.

Mikrotiterplatten werden für die unterschiedlichsten mikrobiologischen, zellzüchterischen und immunologischen Arbeitsgänge benutzt. Insbesondere finden Mikrotiterplatten Anwendung für die PCR oder die Züchtung von Mikroorganismen oder Zellen.

Es sind bereits Mikrotiterplatten bekannt, die einen Rahmen mit einer Platte aufweisen, an der eine Vielzahl Gefäße fixiert ist, die einen von der Unterseite der Platte vorstehenden Aufnahmeabschnitt haben und durch Öffnungen von der Oberseite der Platte aus zugänglich sind. Die Gefäße werden auch als "Wells" bezeichnet. Die gängigen 96'er Mikrotiterplatten haben in Reihen und Spalten 8 x 12 = 96 Gefäße. Mehr und mehr werden aber auch Mikrotiterplatten mit einer größeren Anzahl Gefäße verwendet.

Einkomponentige Mikrotiterplatten aus Polystyrol sind für die PCR nicht geeignet, insbesondere weil die Erweichungstemperatur dieses Kunststoffes (etwa 85 °C) bei der PCR überschritten wird.

Herkömmliche einkomponentige Mikrotiterplatten aus Polypropylen sind grundsätzlich für die PCR verwendbar. Sie sind jedoch biegeweich, neigen zu Verzug, sind uneben und nur mit großen Toleranzen zu fertigen und unterliegen großen Toleranzschwankungen im Einsatz. Sie sind insbesondere für das Automatenhandling nicht besonders geeignet, weil ihre Weichheit das Greifen durch den Automaten erschwert. Ferner kann die geringe Maßhaltigkeit zur Folge haben, so daß die Dosiernadeln beim Einführen in die Gefäße Wandberührung haben. Außerdem ist aufgrund der Dickwandigkeit der Gefäße der Wärmetransfer in die Gefäße schlecht, was nachteilig für die Temperaturregelung und die Länge der Zykluszeiten bei der PCR ist.

Aus der EP 1 161 994 A2 ist eine Mikrotiterplatte bekannt mit einem Rahmen aus einem steifen ersten Kunststoff, der eine Platte mit einer Vielzahl Löcher aufweist, und einer Vielzahl Gefäße aus einem für die PCR geeigneten und/oder eine Sauerstoffdurchlässigkeit aufweisenden zweiten Kunststoff, die durch direktes Anspritzen an die Löcher fest mit der Platte verbunden sind, einen von der Unterseite der Platte vorstehenden Aufnahmeabschnitt haben und durch Öffnungen von der Oberseite der Platte aus zugänglich sind. Der erste Kunststoff kann so ausgewählt sein, daß dem Rahmen die gewünschte Steifigkeit für das Automatenhandling verliehen wird. Ferner offenbart diese Schrift ein Herstellungsverfahren, bei dem die Rahmen und Gefäße der Mikrotiterplatte in einem Mehrkomponentenspritzverfahren hergestellt werden.

US 6,340,589 offenbart Mikrotiterplatten und Verfahren zu deren Herstellung, wobei die Mikrotiterplatten in einem Zweikomponenten-Spritzgießverfahren aus zwei Materialien hergestellt werden.

Davon ausgehend liegt der Erfindung die Aufgabe zugrunde, eine andere Mikrotiterplatte mit günstigeren Anwendungseigenschaften zu schaffen.

Außerdem soll ein Verfahren zur Herstellung der Mikrotiterplatte zur Verfügung gestellt werden.

Die Aufgabe wird durch eine Mikrotiterplatte mit den Merkmalen des Anspruches 1 gelöst.

Die erfindungsgemäße Mikrotiterplatte hat
- einen Rahmen aus einem Kunststoff, der eine Platte mit einer Vielzahl Löcher aufweist, und
- eine Vielzahl Gefäße durch direktes Aneinanderspritzen stoffschlüssig und/oder formschlüssig und/oder kraftschlüssig fest mit der Platte verbunden sind, einen von der Unterseite der Platte vorstehenden Aufnahmeabschnitt haben und durch Öffnungen von der Oberseite der Platte aus zugänglich sind, dadurch gekennzeichnet, dass die Gefäße aus demselben Kunststoff bestehen wie der Rahmen.

Die erfindungsgemäße Mikrotiterplatte besteht also nur aus einem einzigen Kunststoff. Im Unterschied zu herkömmlichen einkomponentigen Mikrotiterplatten, die komplett in einem einzigen Spritzvorgang gespritzt sind, sind bei der erfindungsgemäßen Mikrotiterplatte der Rahmen und die Gefäße in zwei Spritzvorgängen aneinandergespritzt. Dies ermöglicht es, bei Verwendung nur eines einzigen Kunststoffes den Anforderungen an den Rahmen und an die Gefäße durch besondere Ausgestaltung des Rahmens und der Gefäße und darauf speziell abgestimmte Spritzvorgänge Rechnung zu tragen. Durch das Aneinanderspritzen werden kurze Fließwege des Kunststoffmaterials im Rahmen und in den Gefäßen erreicht, was einen erhöhten Spritzdruck ermöglicht und ein besseres Spritzen der Konturen von Rahmen und Gefäßen. So können die Gefäße besonders dünnwandig gespritzt werden, insbesondere für eine hohe Wärmeleitfähigkeit im Hinblick auf den Einsatz in der PCR. Ferner kann durch verhältnismäßig dickwandige Ausführung des Rahmens bzw. Aussteifung desselben durch Rippen bzw. andere Strukturen die Eignung der Mikrotiterplatte für das Automatenhandling sichergestellt werden. Des weiteren hat die Mikrotiterplatte den Vorteil, daß die Gefäße erst nach dem Spritzen und Ausschwinden der Platte ausgespritzt sein können, wodurch besonders maßhaltige Mikrotiterplatten erreicht werden. Zudem können die Kunststoffe des Rahmens und der Gefäße an den Anspritzstellen im Bereich der Löcher miteinander verschmelzen, so daß der Rahmen und die Gefäße stoffschlüssig und damit besonders fest miteinanderander verbunden sind. Dies kann auch dadurch geschehen, daß der bereits erstarrte, zuerst gespritzte Kunststoff durch die Wärme des später gespritzten Kunststoffes angeschmolzen wird und mit dem zweiten Kunststoff verschmilzt.

Grundsätzlich kann die Verbindung der Gefäße mit dem Rahmen durch Stoffschluß und/oder durch Formschluß und/oder durch Kraftschluß erfolgen. Durch Formschluß erfolgt sie bevorzugt, indem die Gefäße an Löcher mit in Axialrichtung veränderlichem Querschnitt und/oder am Randbereich der Löcher auf zumindest einer Seite der Platte formschlüssig mit dieser verbunden sind. Eine kraftschlüssige Verbindung kann beispielsweise durch Ausnutzung eines unterschiedlichen Schwindungsverhaltens des Rahmens und der Gefäße erreicht werden.

Wie bereits erwähnt, werden durch das direkte Aneinanderspritzen sehr geringe Fließwege des Materials beim Spritzen ermöglicht, wodurch besonders geringe Wandstärken der Gefäße erreichbar sind. Diese fallen vorzugsweise in den Bereich von etwa 0,05 bis 0,25 mm, insbesondere etwa 0,1 mm. Dies begünstigt den Wärmetransfer. Dafür ist bevorzugt am Gefäßboden jedes Gefäßes ein Anspritzpunkt vorgesehen, von dem aus das Material einen ersten Wandabschnitt mit verringerter Wandstärke und einem oberen, mit der Platte verbundenen Wandabschnitt ausfüllt. Bevorzugt ist der obere Wandabschnitt als Kragen mit vergrößerter Wandstärke ausgeführt, was eine besonders toleranzarme Herstellung der Mikrotiterplatte ermöglicht.

Durch das Spritzen des Rahmens und der Gefäße in zwei Schritten werden somit mittels Materialien, die den gewünschten Funktionen von Rahmen und Gefäßen nicht zwingend optimal entsprechen, bestmögliche Lösungen erreicht Eine höhere Steifigkeit, bessere Planheit, geringere Verzugsneigung und kleinere Toleranzen werden durch die Gestaltung des Rahmens und einen darauf abgestimmten Spritzvorgang sichergestellt. Vorzugsweise ist der Rahmen der Mikrotiterplatte am Rand mit einer von der Unterseite vorstehenden Einfassung versehen, welche die Stabilität erhöht, eine Standfläche bilden kann und eine Angriffsfläche für den Automaten bietet. Der Rahmen kann vorteilhaft mehrere randseitige Anspritzpunkte aufweisen (etwa vier bis sechs). Die extreme Dünnwandigkeit für einen besseren Wärmetransfer wird durch getrenntes Spritzen der Gefäße erreicht. Über die Gefäße wird kein Rahmen gefüllt, so daß der gesamte Druckgradient nur für jeweils ein Gefäß zur Verfügung steht.

Der Kunststoff kann insbesondere ein Material sein, das durch seine erhöhte Temperaturbeständigkeit und verringerter Affinität bzw. Neutralität zur DNA oder anderen Substanzen für die PCR geeignet ist. Insbesondere für die PCR vorteilhaft ist eine Mikrotiterplatte aus Polypropylen. Dabei handelt es sich vorzugsweise um ein reines Polypropylen, das insbesondere frei ist von proteinhaltigen Additiven oder Füllstoffen. Zur Steigerung der Festigkeit können jedoch grundsätzlich nicht proteinhaltige Füllstoffe in dem Polypropylen enthalten sein. So erscheint es beispielsweise möglich, hoch reine Glasfasern als Füllstoff einzusetzen.

Gemäß einer anderen Ausgestaltung ist der Kunststoff ein Polycarbonat. Für die PCR ist das Polycarbonat bevorzugt ein besonders temperatur- und/oder chcmikalienbeständiges Polycarbonat.

Schließlich haben gemäß einer Ausgestaltung die Kunststoffe des Rahmens und der Gefäße unterschiedliche Farben. Dabei ist insbesondere eine Differenzierung durch eine Schwarz- und eine Weißfärbung der Kunststoffe für Rahmen und Gefäße möglich. Hierdurch wird beispielsweise eine optische Lagekontrolle der Mikrotiterplatten und der Gefäße begünstigt.

Nach dem erfindungsgemäßen Herstellungsverfahren werden Rahmen und Gefäße der Mikrotiterplatte in einem Mehrschußspritzverfahren hergestellt. Im einfachsten Falle handelt es sich dabei um ein Zweischußspritzverfahren oder "Twin-Shot"-Verfahren.

Grundsätzlich ist die Reihenfolge des Spritzens von Rahmen und Gefäßen beliebig. Für eine besonders toleranzarme Herstellung wird bevorzugt zunächst der Rahmen gespritzt und danach die Gefäße. Dies hat den Vorteil, daß der Rahmen zunächst eine gewisse Schrumpfung bzw. Schwindung vollführen kann, bevor die Gefäße angespritzt werden. Dies ist besonders bei kristallinen bzw. teilkristallinen Kunststoffen wie Polypropylen vorteilhaft, die einer starken Schwindung nach dem Spritzen unterliegen. Der Zeitabstand für das Anspritzen der Gefäße vom Spritzen des Rahmens kann so gewählt werden, daß die Schwindung des Rahmens (durch Abkühlen) im wesentlichen vollständig erfolgt. Nach dem Anspritzen der Gefäße wird die Maßhaltigkeit der Mikrotiterplatte durch Schwindungsvorgänge praktisch nicht mehr beeinträchtigt. Insbesondere kann die Ortstoleranz der Gefäße so auf sehr geringe Werte begrenzt werden (etwa ± 0,15 mm um die theoretische Position). Dies begünstigt das Einführen von Dosiernadeln ohne Wandberübrung.

Besonders vorteilhaft ist dabei, wenn der obere Wandbereich der Gefäße als Kragen mit vergrößerter Wandstärke ausgeführt ist, weil der Kragen beim Spritzen verbleibende Lagetoleranzen der Löcher ausgleichen kann.

Gemäß einer Ausgestaltung wird der Rahmen nach dem Spritzen zunächst getempert und werden danach die Gefäße an den Rahmen angespritzt. Durch das Tempern kann ein praktisch vollständiges Ausschwinden des Kristallgefüges des Rahmens erzielt werden. Beispielsweise kann dies durch Tempern bei einer Temperatur von bis zu etwa 120°C über eine Zeitdauer von bis zu etwa einer Stunde erfolgen. Insbesondere ein Rahmen aus Polypropylen kann unter den genannten Bedingungen vollständig ausschwinden.

Gemäß einer Ausgestaltung sind die Gefäße und der Rahmen unterschiedlich gefärbt.

Zur Herstellung dieser Mikrotiterplatte kommt vorzugsweise wiederum ein Mehrschußspritzverfahren zum Einsatz, insbesondere ein Zweischußspritzverfahren ("Twin-Shot"-Verfahren).

Die Erfindung wird nachfolgend anhand der anliegenden Zeichnungen von Ausführungsbeispielen näher erläutert. In den Zeichnungen zeigen:
- Fig. 1: eine 96er-Mikrotiterplatte mit Rahmen und Gefäßen aus verschiedenen Kunststoffen in der Draufsicht;
- Fig. 2: dieselbe Mikrotiterplatte in einer Perspektivansicht schräg von unten;
- Fig. 3: dieselbe Mikrotiterplatte in einem stark vergrößerten vertikalen Teilschnitt durch die Platte des Rahmens und ein Gefäß.

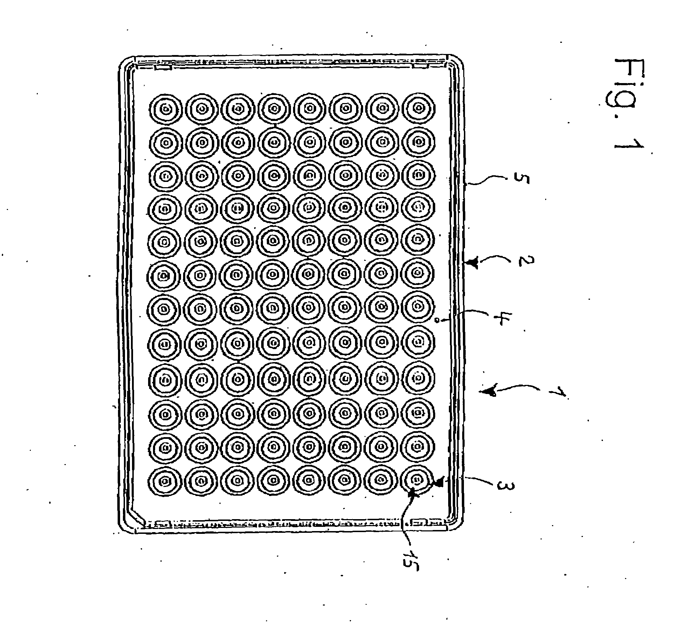

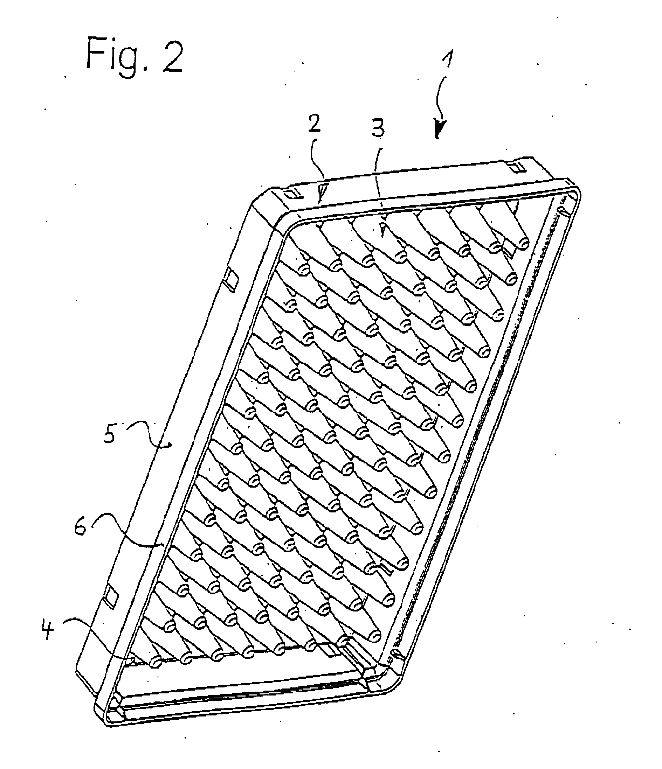

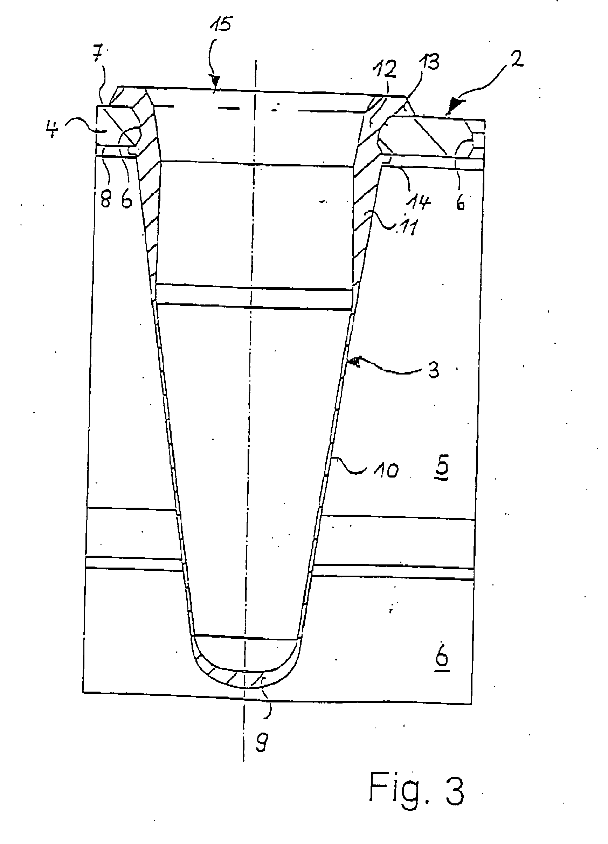

Gemäß Fig. 1 bis 3 besteht eine Mikrotiterplatte 1 aus einem Rahmen 2 und einer Vielzahl Gefäßen 3. In 8 Spalten und 12 Reihen sind insgesamt 96 Gefäße 3 vorhanden.

Der Rahmen 2 weist eine im wesentlichen rechteckige Platte 4 auf, um deren äußeren Rand eine Einfassung 5 umläuft, etwa senkrecht von der Unterseite der Platte 4 hinaussteht, und zwar über die Gefäße 3 hinaus. Unten hat die Einfassung 5 in bekannter Weise eine Aufweitung 6, die eine Stapelbarkeit auf der Oberseite einer entsprechenden Mikrotiterplatte 1 gewährleistet.

Der Rahmen 2 weist in der Platte 4 insgesamt 96 Löcher 6 auf. Diese haben jeweils einen Querschnittsverlauf, der sich zur Oberseite der Platte 7 hin in zwei Abschnitten unterschiedlicher Konizität und zur Unterseite 8 der Platte 4 in einem konischen Abschnitt erweitert.

Der Rahmen 2 ist in einem ersten Spritzschritt integral aus einem Kunststoff gespritzt. Vorzugsweise kommt ein hoch reines, gegebenenfalls mit einem proteinfreien Füllstoff gefülltes Polypropylen zum Einsatz, der ausgehärtet dem Rahmen 2 eine gewisse Steifigkeit verleiht. Die Anspritzpunkte befinden sich am Rand des Rahmens 2, beispielsweise am unteren Rand der Einfassung 5.

Die Gefäße 3 haben unten einen napfförmigen Boden 9, an den ein kegelförmiger Wandabschnitt 10 sehr geringer Wandstärke (ca 0,1 mm) angrenzt. Darüber befindet sich ein Wandabschnitt 11, dessen Wandstärke nach oben allmählich zunimmt. Außen weist er dieselbe Konizität wie der Wandabschnitt 10 auf. Innen ist er jedoch beinahe zylindrisch ausgeführt, wodurch sich ein etwa keilförmiger Querschnittsverlauf ergibt.

Der Wandabschnitt 11 endet in einem Kragen 12, der ebenfalls gegenüber dem Wandabschnitt 10 erheblich vergrößerte Wandstärke aufweist. Im Bereich des Kragens 12 sind die Gefäße 3 an die Platte 4 angespritzt. Dafür liegt der Kragen 12 außen am Innenumfang der Löcher 6 an. Ferner hat er an der Oberseite 7 und der Unterseite 8 der Platte 4 jeweils einen Überstand 13, 14, wodurch sich eine sichere Verbindung mit der Platte 4 ergibt.

Im Bereich des Kragens 12 haben die Gefäße 3 einen sich nach oben in zwei Abschnitten unterschiedlicher Konizität erweiternden Querschnitt. Von der Oberseite 7 der Platte 4 sind die Gefäße durch Öffnungen 15 zugänglich.

Sämtliche Gefäße sind gleichzeitig direkt an den Rahmen 1 bzw. an die Löcher 6 desselben angespritzt. Jedes Gefäß 6 hat einen eigenen zentralen Anspritzpunkt an der Unterseite des Bodens 9. Hierdurch werden kurze Spritzwege erreicht, die die besonders geringe Wandstärke im Wandabschnitt 10 ermöglicht. Insbesondere bei Einsatz von Polypropylen als Kunststoff ist die Eignung der Gefäße für die Verwendung bei der PCR gegeben. Die für das Automatenhandling erforderliche Steifigkeit des Rahmens 2 kann durch dessen Dimensionierung bzw. Aussteifungen bzw. geeignete Füllstoffe des Polypropylen sichergestellt werden.

## Patentansprüche

1. Mikrotiterplatte mit
- einem Rahmen (2) aus einem Kunststoff, der eine Platte (4) mit einer Vielzahl Löcher (6) aufweist, und
- einer Vielzahl Gefäße (3), die an den Löchern (6) durch direktes Aneinanderspritzen formschlüssig und/oder kraftschlüssig und/oder stoffschlüssig fest mit der Platte (4) verbunden sind, einen von der Unterseite (8) der Platte (4) vorstehenden Aufnahmeabschnitt (9, 10, 11) haben und durch Öffnungen (15) von der Oberseite (7) der Platte aus zugänglich sind, **dadurch gekennzeichnet, dass** die Gefäße (3) aus demselben Kunststoff bestchen wie der Rahmen (2).

2. Mikrotiterplatte nach Anspruch 1, bei der die Gefäße (3) durch Anspritzen an Löcher (6) mit in Axialrichtung veränderlichem Querschnitt und/oder an den Randbereich der Löcher (6) auf zumindest einer Seite (7, 8) der Platte (4) formschlüssig mit dieser verbunden sind.

3. Mikrotiterplatte nach Anspruch 1 oder 2, bei der die Gefäße (3) angrenzend an einen Gefäßboden (9) einen Wandabschnitt (10) mit sehr geringer Wandstärke haben und mit einem oberen Wandabschnitt (12) mit der Platte (4) verbunden sind.

4. Mikrotiterplatte nach einem der Ansprüche 1 bis 3, bei der die Gefäße (3) als oberen mit der Platte (4) verbundenen Wandabschnitt (12) einen Kragen mit vergrößerter Wandstärke haben.

5. Mikrotiterplatte nach einem der Ansprüche 1 bis 4, bei der die Gefäße (3) einen im wesentlichen napfförmigen Boden (9) haben und/oder Wandabschnitte (10) mit geringer Wandstärke im wesentlichen konisch sind und/oder bei einem daran angrenzenden Wandabschnitt (11) eine sich nach oben allmählich vergrößernde Wandstärke aufweisen.

6. Mikrotiterplatte nach einem der Ansprüche 1 bis 5, bei der die Gefäße (3) Anspritzpunkte am Gefäßboden (9) aufweisen und/oder bei der der Rahmen (2) mehrere randseitige Anspritzpunkte aufweist.

7. Mikrotiterplatte nach einem der Ansprüche 1 bis 6, bei der der Rahmen (2) am Rand der Platte (4) eine von deren Unterseite (8) vorstehende Einfassung (5) aufweist.

8. Mikrotiterplatte nach einem der Ansprüche 1 bis 7, die aus Polypropylen und/oder die aus Polycarbonat besteht oder die aus einem besonders temperaturbeständigen und/oder chemikalienbeständigen PC besteht.

9. Mikrotiterplatte nach einem der Ansprüche 1 bis 8, die aus einem Kunststoff mit nicht proteinhaltigem Füllstoff besteht und/oder die aus einem mit Glasfasern gefüllten Kunststoff besteht.

10. Mikrotiterplatte nach einem der Ansprüche 1 bis 9, bei dem die Kunststoffe des Rahmens und der Gefäße unterschiedliche Farben haben.

11. Verfahren zum Herstellen einer Mikrotiterplatte nach einem der Ansprüche 1 bis 10, bei dem der Rahmen (2) und die Gefäße (3) in einem Mehrschußspritzverfahren hergestellt werden.

12. Verfahren nach Anspruch 11, bei dem zunächst der Rahmen (2) und danach die Gefäße (3) gespritzt werden.

13. Verfahren nach Anspruch 12, bei dem in einem das Schwinden des Rahmens (2) im wesentlichen vollständig gewährleistenden Zeitabstand vom Spritzen des Rahmens (2) die Gefäße (3) gespritzt werden.

14. Verfahren nach Anspruch 13, bei dem der Rahmen nach dem Spritzen getempert wird und danach die Gefäße gespritzt werden.

15. Verfahren nach einem der Ansprüche 11 bis 14, bei dem der Rahmen (2) von mehreren Anspritzpunkten im Randbereich aus gespritzt wird und/oder bei dem die Gefäße (3) von jeweils einem eigenen Anspritzpunkt von ihrem Boden (9) aus gespritzt werden.

## Claims

1. A microtiter plate with:
- a frame (2) consisting of a plastic that has a plate (4) with a plurality of holes (6), and
- a plurality of vessels (3) that are securely connected to the plate (4) by being injection molded directly onto the holes (6) in a form-fit, and/or force-fit, and/or integral manner, have a seat section (9, 10, 11) projecting from the bottom side (8) of the plate (4), and are accessible through openings (15) from the topside (7) of the plate, **characterized in that** the vessels (3) consist of the same plastic as the frame (2).

2. The microtiter plate according to claim 1, wherein the vessels (3) are connected to the plate in a form fit manner by being injection molded onto holes (6) with a cross-section that changes in the axial direction, and/or onto the edge area of the holes (6) on at least one side (7, 8) of the plate (4).

3. The microtiter plate according to claim 1 or 2, wherein the vessels (3) have a wall section (10) neighboring a vessel floor (9) with a very thin wall thickness and are connected to the plate (4) with a top wall section (12).

4. The microtiter plate according to one of claims 1 to 3, wherein the vessels (3) have a collar with a larger wall thickness as the top wall section (12) connected to the plate (4).

5. The microtiter plate according to one of claims 1 to 4, wherein the vessels (3) have an essentially cup-shaped floor (9), and/or wall sections (10) with a thinner wall thickness are substantially conical and/or when there is a neighboring wall section (11), have a gradually increasing wall thickness.

6. The microtiter plate according to one of claims 1 to 5, wherein the vessels (3) have injection points on the vessel floor (9), and/or wherein the frame (2) has a plurality of injection points on the edge.

7. The microtiter plate according to one of claims 1 to 6, wherein the frame (2) has an edging (5) on the edge of the plate (4) that projects from the bottom side (8).

8. The microtiter plate according to one of claims 1 to 7 that consists of polypropylene, and/or that consists of polycarbonate, and/or that consists of a particularly temperature-resistant and/or chemical-resistant polycarbonate.

9. The microtiter plate according to one of claims 1 to 8 that consists of a plastic with a non-protein containing filler, and/or that consists of a plastic filled with glass fibers.

10. The microtiter plate according to one of claims 1 to 9, wherein the plastics of the frame and the vessels have different colors.

11. A method to produce a microtiter plate according to one of claims 1 to 10, wherein the frame (2) and the vessels (3) are manufactured in a multiple injection molding procedure.

12. The method according to claim 11, wherein the frame (2) and then the vessels (3) are injected.

13. The method according to claim 12, wherein the vessels (3) are injected at an interval from the injection of the frame (2) that substantially guarantees the complete shrinkage of the frame (2).

14. The method according to claim 13, wherein the frame is tempered after being injected, and then the vessels are injected.

15. The method according to one of claims 11 to 14, wherein the frame (2) is injected from several injection points in the edge area, and/or wherein the vessels (3) are each injected from their own injection point from their floor (9).

## Revendications

1. Plaque de microtitration, avec
- un cadre (2) en matière plastique qui présente une plaque (4) avec une multiplicité de trous (6), et
- une multiplicité de récipients (3) qui sont raccordés fixement à la plaque (4) par assemblage par moulage direct au niveau des trous (6), par liaison de forme et/ou par liaison de force et/ou par liaison de matière, qui ont un segment de réception (9, 10, 11) faisant saillie par rapport au côté inférieur (8) de la plaque (4), et qui sont accessibles par des ouvertures (15) à partir du côté supérieur (7) de la plaque, **caractérisée en ce que** les récipients (3) sont réalisés avec la même matière plastique que le cadre (2).

2. Plaque de microtitration selon la revendication 1, dans laquelle les récipients (3) sont raccordés par liaison de forme à la plaque (4) par moulage par injection au niveau de trous (6) ayant une section transversale variable dans la direction axiale et/ou au niveau de la zone de bord des trous (6) sur au moins un côté (7, 8) de la plaque (4).

3. Plaque de microtitration selon la revendication 1 ou 2, dans laquelle les récipients (3) ont, de façon adjacente à un fond de récipient (9), un tronçon de paroi (10) ayant une très faible épaisseur de paroi et sont raccordés à la plaque (4) par un tronçon de paroi (12) supérieur.

4. Plaque de microtitration selon une des revendications 1 à 3, dans laquelle les récipients (3) ont, en tant que tronçon de paroi (12) raccordé à la plaque (4), un col ayant une épaisseur de paroi agrandie.

5. Plaque de microtitration selon une des revendications 1 à 4, dans laquelle les récipients (3) ont un fond (9) essentiellement en forme de coupelle et/ou sont des tronçons de paroi (10) essentiellement coniques ayant une faible épaisseur de paroi et/ou, au niveau d'un tronçon de paroi (11) qui y est adjacent, présentent une épaisseur de paroi qui augmente peu à peu vers le haut.

6. Plaque de microtitration selon une des revendications 1 à 5, dans laquelle les récipients (3) présentent des points d'injection sur le fond de récipient (9) et/ou dans laquelle le cadre (2) présente plusieurs points d'injection côté bord.

7. Plaque de microtitration selon une des revendications 1 à 6, dans laquelle le cadre (2) présente, sur le bord de la plaque (4), une monture (5) faisant saillie par rapport au côté inférieur (8) de la plaque.

8. Plaque de microtitration selon une des revendications 1 à 7, qui se compose de polypropylène et/ou de polycarbonate ou qui se compose d'un PC particulièrement résistant à la température et/ou résistant aux produits chimiques.

9. Plaque de microtitration selon une des revendications 1 à 8, qui se compose d'une matière plastique ayant une charge contenant des protéines et/ou qui se compose d'une matière plastique remplie de fibres de verre.

10. Plaque de microtitration selon une des revendications 1 à 9, dans laquelle les matières plastiques du cadre et des récipients ont des couleurs différentes.

11. Procédé de fabrication d'une plaque de microtitration selon une des revendications 1 à 10, dans lequel le cadre (2) et les récipients (3) sont fabriqués dans un procédé d'injection à plusieurs charges.

12. Procédé selon la revendication 11, dans lequel le cadre (2) est injecté en premier puis les récipients (3) sont injectés.

13. Procédé selon la revendication 12, dans lequel les récipients (3) sont injectés à un intervalle de temps par rapport à l'injection du cadre (2) qui garantit de façon essentiellement complète le retrait du cadre (2).

14. Procédé selon la revendication 13, dans lequel le cadre est étuvé après l'injection et puis les récipients sont injectés.

15. Procédé selon une des revendication 11 à 14, dans lequel le cadre (2) est injecté à partir de plusieurs points d'injection dans la zone de bord et/ou dans lequel les récipients (3) sont injectés à partir de respectivement un propre point d'injection de leur fond (9).
